# EUROPEAN PATENT APPLICATION

(11) **EP 4 843 871 A1**
(43) Date of publication of application: **25.11.2026**
(21) Application number: 26168718.0
(22) Date of filing: 27.03.2026
(51) Int. Cl.: B62D 21/11, B60G 1/00, B60K 1/00

(54) **VEHICLE FRONT STRUCTURE**

(30) Priority: 20.05.2025 JP 2025084203
(71) Applicant: Suzuki Motor Corporation, Hamamatsu-shi, Shizuoka 432-8611 (JP)
(72) Inventor: KOIKE, Yosuke, HAMAMATSU-SHI, 432-8611 (JP)
(74) Representative: Plasseraud IP

(57) **Abstract**

[Problem to be Solved]

To improve support rigidity for a drive unit.

[Solution]

A vehicle front structure 100 includes a suspension frame 50 including a pair of side frames 10, a frame body 20, and an arm holding portion 30, a plurality of support members 80 being attached to the suspension frame 50 and supporting a drive unit M, the side frame 10 includes an upper member 14, a lower member 15 forming, cooperatively with the upper member 14, a closed sectional structure C1 that is tubular in sectional view orthogonal to a vehicle front-rear direction, and a reinforcement portion 16 including an opposite wall 161 spaced downward from and facing a lower surface of a front portion of the lower member 15, the reinforcement portion 16 forms, at least cooperatively with the front portion of the lower member 15, a lower closed sectional structure C2 that is tubular in sectional view orthogonal to the vehicle front-rear direction, the lower closed sectional structure C2 overlapping the closed sectional structure C1 from below, and the plurality of support members 80 include a side support member 81 fixed on a portion of the upper member 14, the portion being located above the lower closed sectional structure C2.

## Description

### [Technical Field]

The present invention relates to vehicle front structures.

### [Background Art]

Patent Literature 1 discloses a subframe (hereinafter referred to as suspension frame) disposed at a lower portion of a vehicle front portion and supporting a power unit while swingably supporting a suspension link structure member. The suspension frame disclosed in Patent Literature 1 includes a front framework portion extending in the vehicle width direction, a rear framework portion spaced rearward of the front framework portion and extending in the vehicle width direction, and left and right framework portions extending in the vehicle front-rear direction at left and right outer portions of the suspension frame and spaced from each other in the vehicle width direction, and is formed in a substantially quadrilateral shape as a whole. A swing shaft extending in the vehicle front-rear direction is disposed at outer portions of the left and right framework portions, and the suspension link structure member is supported by the outer portions of the left and right framework portions so as to be swingable in the up-down direction through the swing shaft. A concave notch portion for attaching the swing shaft to the outer portions of the left and right framework portions is provided forward of a disposition portion of the swing shaft at the outer portions of the left and right framework portions, and the swing shaft is inserted into the disposition portion from the notch portion side. Furthermore, in the structure disclosed in Patent Literature 1, the suspension frame is attached to the vehicle body through attachment pins provided at respective end portions of the front framework portion and attachment holes provided at respective end portions of the rear framework portion. Accordingly, in the structure disclosed in Patent Literature 1, support points (fixation points) of the suspension frame to the vehicle body are provided at the front and rear ends of the vehicle-width-direction outer portions of the suspension frame.

### [Citation List]

### [Patent Literature]

[Patent Literature 1] JP 2003-002229 A

### [Summary of Invention]

### [Problem to be Solved by the Invention]

However, in the structure of Patent Document 1, the notch portion is provided at the suspension frame for attaching the swing shaft to the outer portions of the left and right framework portions, which causes decrease in rigidity of the suspension frame, that is, decrease in support rigidity for the power unit (drive unit), and thus, there is room for improvement.

The present invention is intended to solve the above-described problem, and an object thereof is to provide a vehicle front structure capable of improving support rigidity for a drive unit.

### [Means for Solving the Problem]

According to an aspect of the present invention for achieving the above-described object, a vehicle front structure is provided, the vehicle front structure including a suspension frame, the suspension frame including a pair of side frames, a frame body, and an arm holding portion, the pair of side frames extending in a vehicle front-rear direction at a lower portion of a vehicle front portion and spaced from each other in a vehicle width direction, the frame body extending in the vehicle width direction and connecting rear portions of the pair of side frames, the arm holding portion swingably holding a suspension arm, a plurality of support members being attached to the suspension frame and supporting a drive unit configured to generate driving power. In the vehicle front structure, each of the pair of side frames includes an upper member constituting an upper portion of the side frame and extending in the vehicle front-rear direction, a lower member joined to the upper member from below and extending in the vehicle front-rear direction, the lower member forming, cooperatively with the upper member, a closed sectional structure that is tubular in sectional view orthogonal to the vehicle front-rear direction, and a reinforcement portion including an opposite wall spaced downward from and facing a lower surface of a front portion of the lower member, the reinforcement portion forms, at least cooperatively with the front portion of the lower member, a lower closed sectional structure that is tubular in sectional view orthogonal to the vehicle front-rear direction, the lower closed sectional structure overlapping the closed sectional structure from below, and the plurality of support members include a side support member fixed on a portion of the upper member, the portion being located above the lower closed sectional structure.

### [Advantageous Effect of Invention]

According to an aspect of the present invention, it is possible to provide a vehicle front structure capable of improving support rigidity for a drive unit.

### [Brief Description of Drawings]

[Figure 1] Figure 1 is a schematic perspective view showing an embodiment of a vehicle front structure according to the present invention.
[Figure 2] Figure 2 is a schematic side view of the vehicle front structure.
[Figure 3] Figure 3 is a schematic top view of the vehicle front structure.
[Figure 4] Figure 4 is a schematic top view of the vehicle front structure from which a front side member is omitted.
[Figure 5] Figure 5 is an enlarged perspective view of a main portion of the vehicle front structure.
[Figure 6] Figure 6 is an enlarged perspective view of the main portion of the vehicle front structure from which a suspension arm is omitted.
[Figure 7] Figure 7 is a cross-sectional view of an intermediate frame portion of a side frame of the vehicle front structure along line A-A shown in Figure 4.
[Figure 8] Figure 8 is an enlarged perspective view of a front portion of the side frame when viewed obliquely from below.
[Figure 9] Figure 9 is a side view for description of the internal structure of the side frame.
[Figure 10] Figure 10 is a cross-sectional view of the intermediate frame portion of the side frame according to a modification.
[Figure 11] Figure 11 is an enlarged perspective view of the portion of the side frame according to the modification on the front side when viewed obliquely from below.
[Figure 12] Figure 12 is a side view for description of the internal structure of the side frame according to the modification.

### [Mode for Carrying Out the Invention]

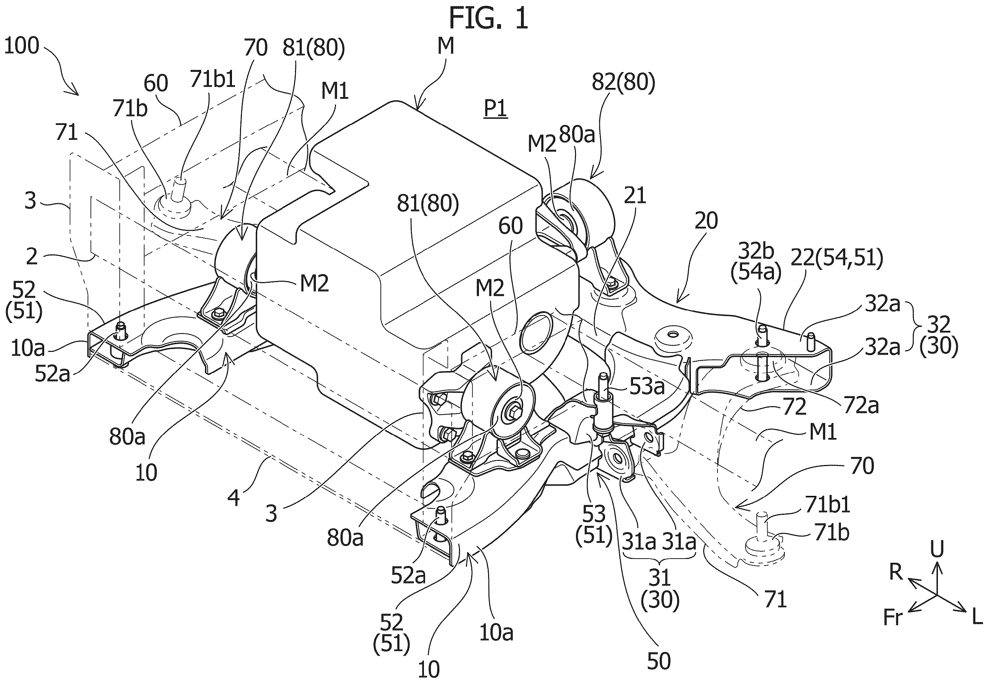

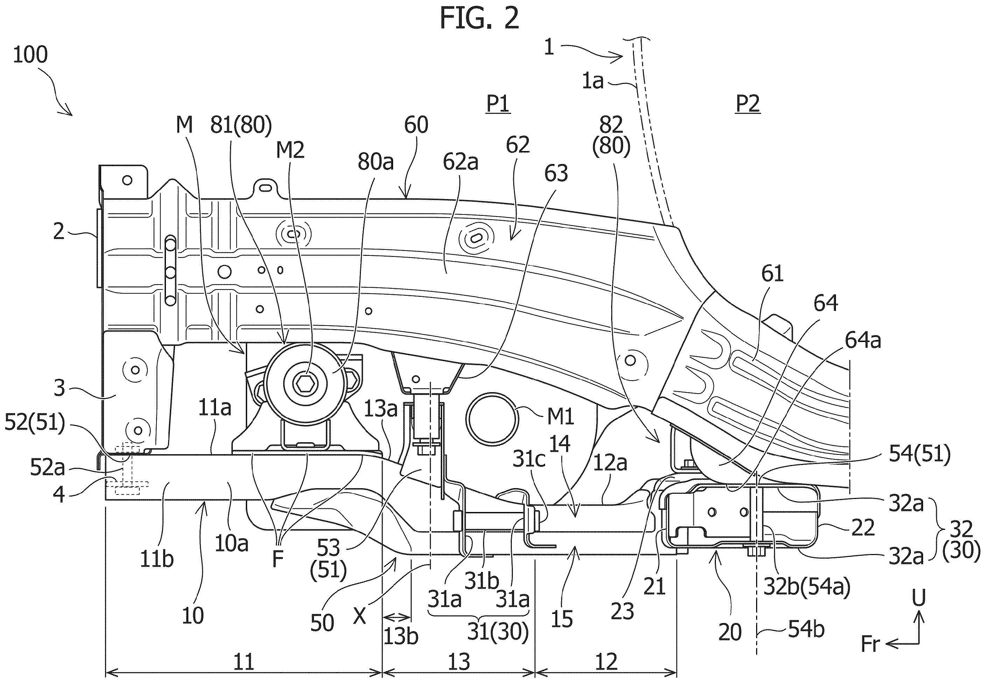

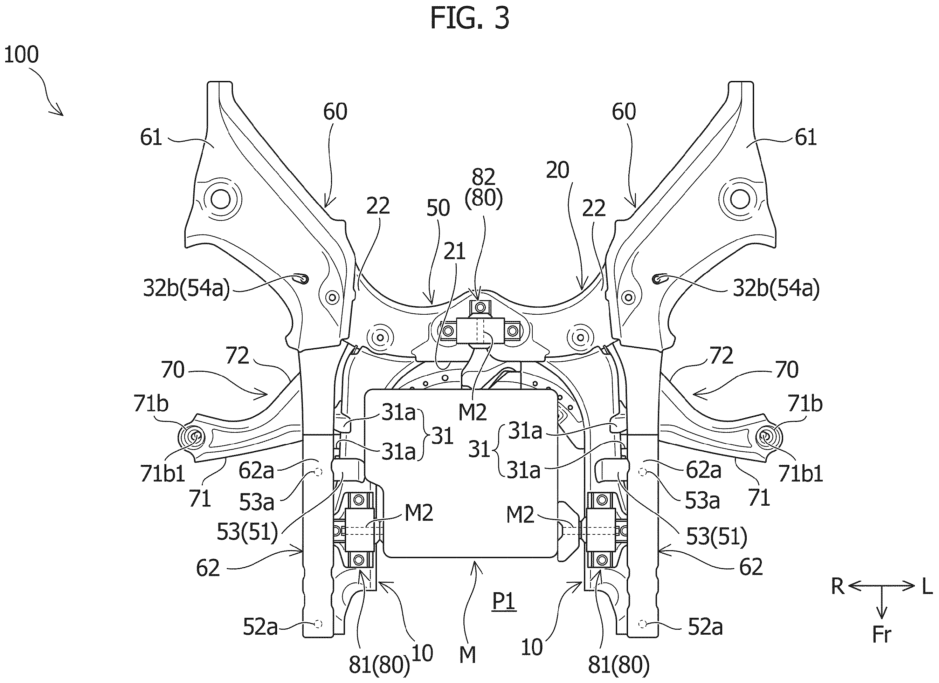

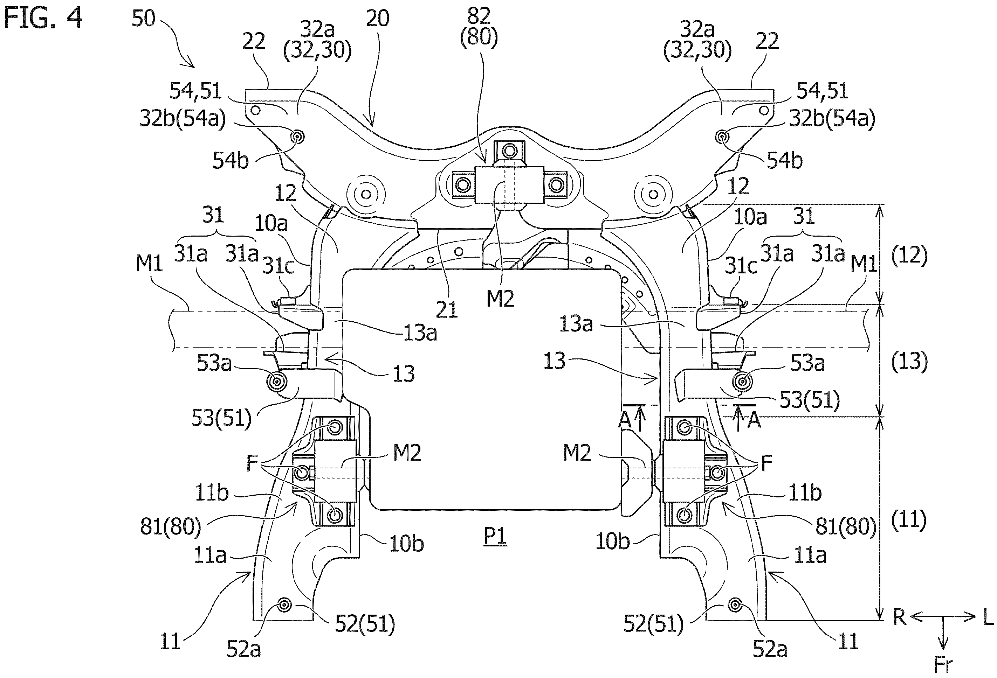

An embodiment of the present invention will be described below with reference to the accompanying drawings. Figures 1 to 4 are diagrams for description of a vehicle front structure 100 according to the embodiment of the present invention: Figure 1 is a schematic perspective view of the vehicle front structure 100 when viewed obliquely from above and the vehicle front side; Figure 2 is a schematic side view thereof when viewed from the left side; Figure 3 is a schematic top view thereof when viewed from above; and Figure 4 is a schematic top view thereof from which a front side member 60, described later, is omitted. Note that, in the diagrams, the direction of arrow Fr indicates the front side in the vehicle front-rear direction, the direction of arrow U indicates the upper side in the vehicle up-down direction, the direction of arrow R indicates the right side in the vehicle width direction in a state in which a passenger in the vehicle is facing the vehicle front side, and the direction of arrow L indicates the left side in the vehicle width direction in a state in which a passenger in the vehicle is facing the vehicle front side. In the description below "front" and "rear" correspond to front and rear in the vehicle front-rear direction, "upper" and "lower" correspond to upper and lower in the vehicle up-down direction, and "left" and "right" correspond to left and right in the vehicle width direction in a state in which a passenger in the vehicle is facing the vehicle front side.

The vehicle front structure 100 is a structure at a front portion of a vehicle driven by a drive unit M configured to generate driving power. In the present embodiment, the vehicle front structure 100 is not particularly limited, but is applied to, for example, a structure at a front portion of an electric vehicle driven by the drive unit M including a driving motor. The drive unit M drives the front wheels by generating power that drives the front wheels. The drive unit M is also referred to as a motor unit.

The drive unit M is disposed on the front side relative to a dash panel 1 provided at a rear portion of the vehicle front portion. Specifically, the dash panel 1 is for example, a steel plate panel that separates a powertrain compartment P1 and a passenger compartment P2, and extends substantially in the vehicle width direction and the vehicle up-down direction. For example, the drive unit M that is a drive device including an electric motor is disposed in the powertrain compartment P1. The powertrain compartment P1 is also referred to as a power unit compartment and is mainly formed by the dash panel 1, a front bumper (not shown), and a front hood (not shown) extending from an upper end portion of the dash panel 1 to an upper end portion of the front bumper.

As shown Figures 1 to 4, the vehicle front structure 100 includes a suspension frame 50. In the present embodiment, the vehicle front structure 100 further includes a pair of front side members 60. The suspension frame 50 is supported by the front side members 60.

The suspension frame 50 is disposed in a bottom region of the powertrain compartment P1. The suspension frame 50 is a frame for supporting front suspensions and is a high-rigidity member. The suspension frame 50 is formed as one component by, for example, joining a plurality of steel plate members subjected to press working or the like by spotwelding or the like.

In the vehicle front structure 100, the suspension frame 50 is used as a frame supporting the drive unit M. Suspension arms 70 of the front suspensions are swingably attached to the suspension frame 50. In addition, a plurality of support members 80 (81, 81, and 82) supporting the drive unit M are attached to the suspension frame 50. Note that the structures and the like of the suspension frame 50, the suspension arms 70, and the support members 80 will be described later.

The pair of front side members 60 are high-rigidity members constituting part of a vehicle body structure member (vehicle body framework) at the vehicle front portion. Accordingly, the suspension frame 50 is supported by the front side members 60 constituting part of the vehicle body structure member. The pair of front side members 60 extend in the vehicle front-rear direction above the suspension frame 50 and are spaced from each other in the vehicle width direction. Each front side member 60 is formed as one member by, for example, joining a plurality of steel plate members subjected to press working or the like by spotwelding or the like.

Each front side member 60 extends from a vehicle-width-direction outer portion of a lower portion of the dash panel 1 toward the front bumper (not shown). A portion of each front side member 60 on the dash panel 1 side is joined to the lower portion of the dash panel 1 by spotwelding or the like. The portion of each front side member 60 on the dash panel 1 side is also joined by spotwelding or the like to a vehicle-width-direction outer portion of a front cross member (not shown) extending in the vehicle width direction along the lower portion of the dash panel 1.

Each of the pair of front side members 60 includes a body portion 62 constituting a major part of the front side member 60 except for a rear portion (that is, a major part including a front portion and a central portion of the front side member 60 in the vehicle front-rear direction). The body portion 62 protrudes toward the vehicle front side beyond the dash panel 1 provided at the rear portion of the vehicle front portion. The body portion 62 is spaced on the vehicle upper side relative to a pair of side frames 10 of the suspension frame 50, which will be described later, and extends in the vehicle front-rear direction. In this manner, the body portion 62 protruding forward from the dash panel 1 is formed as, for example, a high-rigidity member having relatively high rigidity against a load in the vehicle up-down direction to constitute part of the vehicle body structure member. For example, the body portion 62 has a width larger than the width of the side frames 10 in the vehicle up-down direction. Specifically, the lower portion of the dash panel 1 is curved toward the passenger compartment P2 side, the dash panel 1 includes a panel front surface portion 1a facing the vehicle front side and extending substantially in the vehicle up-down direction, and the panel front surface portion 1a is located at a part above the curved lower portion of the dash panel 1. The body portion 62 protrudes toward the front side substantially beyond the panel front surface portion 1a of the dash panel 1 in side view when viewed from one side in the vehicle width direction.

In the example shown, each of the pair of front side members 60 includes a rear curved portion 61 in addition to the body portion 62. The rear curved portion 61 is a portion constituting a rearmost portion of the front side member 60, has a predetermined length in the vehicle up-down direction, and is curved inward in the vehicle width direction as it extends from the rear side toward the front side. A front portion of the rear curved portion 61 is tilted so as to be separated upward of the suspension frame 50 as it extends from the rear side toward the front side. The rear end of the rear curved portion 61 is joined to, for example, the vehicle-width-direction inner surface of a not shown side sill. The body portion 62 is joined to a front end portion of the rear curved portion 61 and extends toward the vehicle front side continuously with the front end portion of the rear curved portion 61. The body portion 62 has a closed sectional structure in a substantially quadrilateral shape (in other words, rectangular tubular shape) in sectional view orthogonal to the longitudinal direction of the body portion 62 (vehicle front-rear direction).

In the example shown, a body intermediate portion 62a that is an intermediate portion of the body portion 62 in the vehicle front-rear direction is tilted so as to approach the suspension frame 50 (specifically, side frame 10, to be described later) as it extends from the front side toward the rear side. In the example shown, the body intermediate portion 62a is located at a substantially central portion of the body portion 62 in the vehicle front-rear direction, which protrudes forward beyond the panel front surface portion 1a. A portion of the body portion 62 on the front side relative to the substantially central portion (body intermediate portion 62a) in the vehicle front-rear direction linearly extends, and the central portion (body intermediate portion 62a) of the body portion 62 and a portion of the rear side relative to the central portion is tilted so as to approach the suspension frame 50 as they extend rearward. Accordingly, in side view when viewed from one side in the vehicle width direction (refer to Figure 2), the front side member 60 is tilted upward as it extends toward from the rear side (side sill side) to the front side (front bumper side) and linearly extends forward from a front portion of the substantially central portion of the body portion 62.

In the example shown, a front end portion of one of the front side members 60 and a front end portion of the other front side members 60 are coupled to each other through a bumper member 2, and the front end portion of each front side member 60 is supported from below by a radiator support brace 3. Note that illustration of the bumper member 2, the radiator support brace 3, and a radiator lower cross frame 4, to be described later, is omitted in Figures 3 and 4, and illustration of the front side members 60 is also omitted in Figure 4 as described above.

The bumper member 2 is a member supporting the not shown front bumper from the rear surface side and extends in the vehicle width direction along the rear surface of the front bumper. The radiator support brace 3 is a brace that receives a load of a not shown radiator (portion including an evaporator in an air-conditioning refrigerant circuit) and is a member supporting the front end portion of each front side member 60 from below. The radiator support brace 3 is welded to the front end portion of each front side member 60 and extends so as to protrude toward the vehicle lower side beyond the lower surface of each front side member 60. In the example shown, vehicle-width-direction outer portions of the bumper member 2 are fastened to the radiator support brace 3 by fastening members (not shown) such as bolts so that the front end portions of the left and right front side members 60 are connected to each other through the bumper member 2.

In the example shown, the radiator support brace 3 is disposed on the upper surface of the suspension frame 50 at front end portions of the side frames 10, will be described later, and is supported from below by the suspension frame 50 (side frames 10). The radiator support brace 3 connects the front end portions of the front side members 60 and the front end portions of the side frames 10.

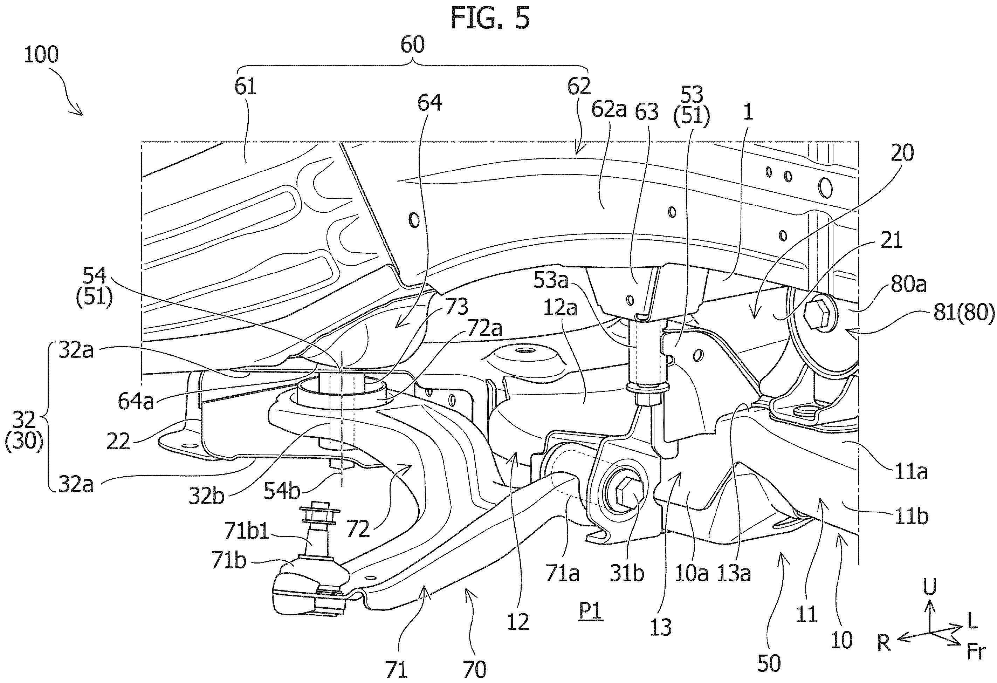

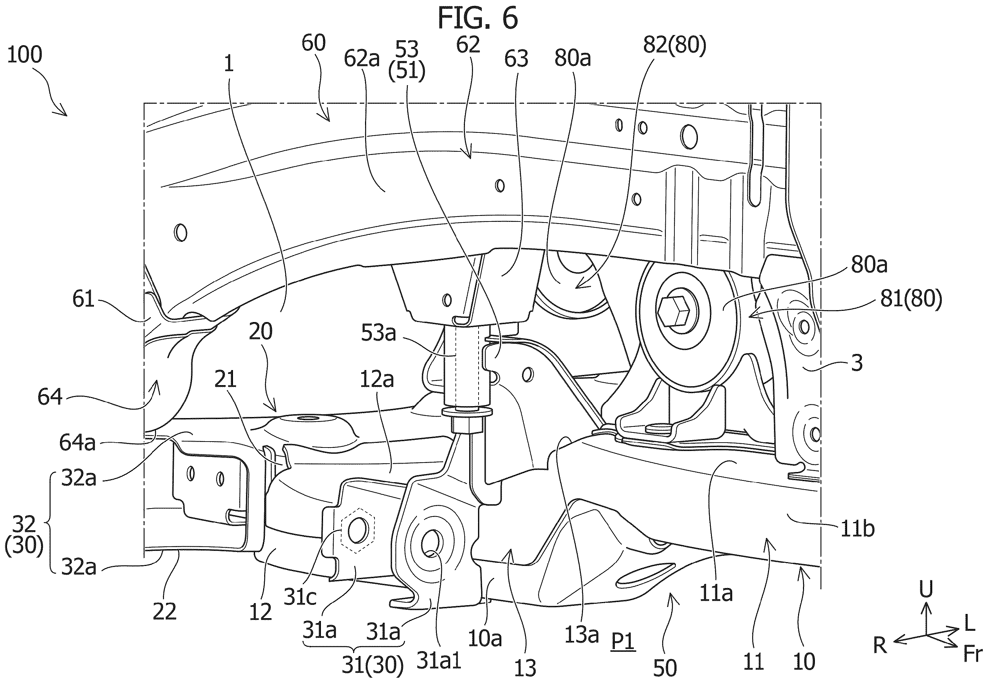

The structures and the like of the suspension frame 50, the suspension arms 70, and the support members 80 will be described next with reference to Figures 1 to 6. Figure 5 is an enlarged perspective view of a main portion of the vehicle front structure 100, and Figure 6 is an enlarged perspective view of the main portion of the vehicle front structure 100 from which the suspension arms 70 are omitted.

The suspension frame 50 includes the pair of side frames 10, a frame body 20, and an arm holding portion 30.

The pair of side frames 10 extend in the vehicle front-rear direction at a lower portion of the vehicle front portion and are spaced from each other in the vehicle width direction. Each side frame 10 is formed as one member by, for example, joining a plurality of steel plate members subjected to press working or the like by spotwelding or the like. Each side frame 10 has a tubular closed sectional structure C1, specifically, the closed sectional structure C1 in a substantially quadrilateral shape (in other words, hollow structure in a rectangular tubular shape) in sectional view orthogonal to the longitudinal direction of the side frame 10 (vehicle front-rear direction).

The side frames 10 are disposed below the corresponding front side member 60. The side frame 10 extends substantially forward from a position below a rear portion of the front side member 60 toward the front bumper (not shown). The front end position of the side frame 10 is aligned with the front end position of the front side member 60.

Each of the pair of side frames 10 includes a front frame portion 11, a rear frame portion 12, and an intermediate frame portion 13.

The front frame portion 11 constitutes a front portion of the side frame 10 and linearly extends in the vehicle front-rear direction. The rear frame portion 12 constitutes a rear portion of the side frame 10, is located on the vehicle rear side and the vehicle lower side relative to the front frame portion 11, and linearly extends in the vehicle front-rear direction. The intermediate frame portion 13 constitutes an intermediate portion of the side frame 10 and connects the rear end of the front frame portion 11 and the front end of the rear frame portion 12. An upper surface 13a of the intermediate frame portion 13 is tilted so as to approach the corresponding front side member 60 as it extends from the rear frame portion 12 side toward the front frame portion 11 side. In other words, the side frame 10 is bent in a crank shape at an intermediate portion in the longitudinal direction of the side frame 10 such that a front portion (front frame portion 11) of the side frame 10 is located upward of a rear portion (the rear frame portion 12) of the side frame 10.

In the present embodiment, the intermediate frame portion 13 includes a tilted portion 13b that is tilted toward the vehicle upper side as the tilted portion extends toward a vehicle front side. The tilted portion 13b is provided at a portion including the front end of the intermediate frame portion 13 and continuous with the front frame portion 11. The upper surface 13a of the intermediate frame portion 13 is tilted over the entire range of the intermediate frame portion 13. The lower surface of the intermediate frame portion 13 on the rear portion side horizontally extends continuously with the lower surface of the rear frame portion 12.

The frame body 20 extends in the vehicle width direction and connects the rear portions of the pair of side frames 10. The frame body 20 is formed as one member by, for example, joining at least two upper and lower steel plate members subjected to press working or the like by spotwelding or the like. The frame body 20 has a tubular closed sectional structure, specifically, a closed sectional structure in a substantially quadrilateral shape (in other words, rectangular tubular shape) in sectional view orthogonal to the longitudinal direction of the frame body 20 (vehicle width direction). In other words, the frame body 20 is formed with a hollow structure. A rear end portion of each side frame 10 is joined by spotwelding or the like to a corresponding vehicle-width-direction outer portion of a front wall 21 of the frame body 20, which faces the vehicle front side.

Both vehicle-width-direction end portions of the frame body 20 constitute protrusion portions 22 protruding outward beyond the rear ends of the side frames 10 in the vehicle width direction. Accordingly, the protrusion portions 22 are portions extended to protrude (project) outward in the vehicle width direction beyond joint places of the frame body 20 where the rear ends of the side frames 10 are joined. Vehicle-width-direction outer end portions of the protrusion portions 22 are opened outward in the vehicle width direction. The protrusion portions 22 extend obliquely rearward toward the outer side in the vehicle width direction from the joint places of the frame body 20, and accordingly, the protrusion portions 22 are also opened toward the vehicle front side.

The arm holding portion 30 is a portion swingably holding the suspension arms 70. In the example shown, the arm holding portion 30 includes a front arm holding portion 31 swingably holding a front end portion of the corresponding suspension arm 70 through a swing shaft portion 31b (hereinafter referred to as front arm swing shaft portion 31b) extending in the vehicle front-rear direction. The front arm holding portion 31 is provided on an outer surface 10a of the intermediate frame portion 13 of the corresponding side frame 10 in the vehicle width direction. Specifically, the front arm holding portion 31 is provided at a portion (rear portion of the outer surface 10a of the intermediate frame portion 13) closer to the center of the side frame 10 in the vehicle front-rear direction and on the rear side.

In the example shown, the arm holding portion 30 further includes a rear arm holding portion 32 swingably holding a rear end portion of the corresponding suspension arm 70. The rear arm holding portion 32 is provided at an end portion (that is, protrusion portion 22) of the frame body 20 in the vehicle width direction.

In the vehicle front structure 100, the drive unit M includes a portion disposed between the pair of side frames 10 in the vehicle width direction. Accordingly, the drive unit M includes a portion located in a region between the pair of side frames 10 in plan view when viewed from one side in the vehicle up-down direction. In the suspension frame 50, a portion corresponding to a disposition region of the drive unit M is formed in a shape open toward the vehicle front side. Accordingly, the suspension frame 50 is formed in a U-shape open toward the vehicle front side as a whole, except for the left and right protrusion portions 22.

Here, each suspension arm 70 is not particularly limited, but as shown in Figures 1, 3, and 5, includes a front arm portion 71 coupled to the front arm holding portion 31, and a rear arm portion 72 coupled to the rear arm holding portion 32. The front arm portion 71 includes an inner end portion swingably coupled to the front arm holding portion 31, and an outer end portion swingably coupled to a knuckle of the corresponding not shown front wheel. The front arm portion 71 extends substantially in the vehicle width direction and couples the suspension frame 50 and the front wheel. The rear arm portion 72 extends substantially rearward from an intermediate portion of the front arm portion 71 toward the rear arm holding portion 32. The rear arm portion 72 includes a rear end portion swingably coupled to the rear arm holding portion 32. The rear arm portion 72 is curved (tilted) so as to approach the vehicle-width-direction outer surface 10a of the corresponding side frame 10 as it extends rearward from the front arm portion 71 side. The suspension arm 70 is formed in a substantially L-shape by the front arm portion 71 extending substantially in the vehicle width direction and the rear arm portion 72 extending substantially in the vehicle front-rear direction.

As shown Figures 1 to 6, each front arm holding portion 31 of the arm holding portion 30 includes a pair of front and rear front holding plates 31a joined to a rear portion of the outer surface 10a at the intermediate frame portion 13 of the corresponding side frame 10. The outer surface 10a at the intermediate frame portion 13 is formed flat. The pair of front holding plates 31a are spaced from each other in the vehicle front-rear direction and protrude outward in the vehicle width direction from the outer surface 10a at the intermediate frame portion 13. A shaft insertion hole 31a1 is opened in each front holding plate 31a. A nut 31c is welded at the peripheral edge of the shaft insertion hole 31a1 at the rear surface of the front holding plate 31a on the rear side. A screw portion that is screwed into the nut 31c is formed at a rear portion of each front arm swing shaft portion 31b.

A front bush 71a (refer to Figure 5) made of rubber and formed in a substantially cylindrical shape extending in the vehicle front-rear direction is held at an inner end portion of each front arm portion 71. The inner end portion of the front arm portion 71 is fitted between the corresponding pair of front holding plates 31a. In this state, each front arm swing shaft portion 31b extending in the vehicle front-rear direction is inserted into each of the shaft insertion hole 31a1 on the front side, the front bush 71a, and the shaft insertion hole 31a1 on the rear side and screwed into the nut 31c, and accordingly, the front arm swing shaft portion 31b is attached to the pair of front holding plates 31a and supported by the corresponding front arm holding portion 31. Accordingly, the front arm portion 71 is held by the front arm holding portion 31 so as to be swingable in the up-down direction about the front arm swing shaft portion 31b as a swing center and coupled to the corresponding side frame 10 of the suspension frame 50 through the front arm holding portion 31. In addition, a knuckle side ball joint 71b is attached to an outer end portion of each front arm portion 71. A joint shaft portion 71b1 protruding upward from the knuckle side ball joint 71b is fastened to the knuckle, and accordingly, the side frame 10 and the front wheel are coupled to each other through the front arm portion 71.

As shown in Figures 1, 2, and 5, the rear arm holding portions 32 of the arm holding portion 30 are provided at the respective protrusion portions 22 of the frame body 20. Accordingly, the rear arm holding portions 32 are provided at respective end portions of the frame body 20 in the longitudinal direction (vehicle width direction). More specifically, the frame body 20 is a main frame extending in the vehicle width direction and connecting the left and right rear arm holding portions 32. The suspension frame 50 can easily obtain a high stiffness against lateral loads from the left and right suspension arms 70 by extending the frame body 20 in the right-left direction between the left and right rear arm holding portions 32.

Each rear arm holding portion 32 includes a pair of upper and lower rear holding plates 32a constituted by parts of the corresponding protrusion portion 22. The pair of rear holding plates 32a are spaced from each other in the vehicle up-down direction, the upper rear holding plate 32a is the upper wall of the protrusion portion 22, and the lower rear holding plate 32a is the lower wall of the protrusion portion 22. For example, a rear bush 72a made of a rubber bush is held at a rear end portion of each rear arm portion 72.

As shown in Figure 5, each rear bush 72a is formed in a cylindrical shape, and a cylindrical bush collar 73 extending in the up-down direction is provided so as to penetrate through the radial center of the rear bush 72a. Upper and lower end portions of the bush collar 73 vertically protrude relative to end faces of the rear bush 72a. The rear end portion of the rear arm portion 72, together with the rear bush 72a and the bush collar 73, is fitted between the pair of rear holding plates 32a through the opening of the corresponding protrusion portion 22. In this state, a rear arm swing shaft portion 32b that is a swing shaft portion extending in the up-down direction is inserted into the bush collar 73, attached to the pair of rear holding plates 32a through the pair of rear holding plates 32a, and supported by the rear arm holding portion 32. Accordingly, the rear end portion of the rear arm portion 72 is swingably held by the rear arm holding portion 32 and is coupled to the frame body 20 of the suspension frame 50 through the rear arm holding portion 32.

The suspension frame 50 is supported by the front side members 60 as the vehicle body structure member as described above, and is provided with a plurality of coupling portions 51 that are portions detachably coupled to the front side members 60.

In the present embodiment, the coupling portions 51 detachably coupled to a corresponding one of the pair of front side members 60 are provided at the front and intermediate portions (the front frame portion 11 and the intermediate frame portion 13) of each of the pair of side frames 10 in the vehicle front-rear direction, and the end portions of the frame body 20 of the suspension frame 50 in the vehicle width direction, respectively. Accordingly, the plurality of coupling portions 51 include front coupling portions 52, intermediate coupling portions 53, and rear coupling portions 54.

The front coupling portion 52 is the coupling portion 51 provided at the front frame portion 11. The intermediate coupling portion 53 is the coupling portion 51 provided at the intermediate portion (intermediate frame portion 13) of the side frame 10. Each rear coupling portion 54 is a coupling portion 51 provided at an end portion of the frame body 20 in the vehicle width direction. For example, the coupling portions 51 (52, 53, and 54) are set as fastening points (fastening sites) of the suspension frame 50 to the front side members 60 through bolts (52a, 53a, and 54a).

In the example shown, each front coupling portion 52 is set near the front end of the corresponding side frame 10 (front frame portion 11). A lower end portion of the radiator support brace 3 joined to the front end portion of each front side member 60 is placed on an upper surface 11a of a portion including the front coupling portion 52. A front portion of the side frame 10 is detachably fastened to the lower end portion of the radiator support brace 3 through a bolt 52a penetrating through the side frame 10 at the front coupling portion 52. Accordingly, the front portion of the side frame 10 is detachably coupled to the front side member 60 as the vehicle body structure member through the bolt 52a and the radiator support brace 3 at the front coupling portion 52 and fixed to a front portion of the front side member 60.

In the present embodiment, each intermediate coupling portion 53 protrudes upward from the upper surface 13a of the corresponding the intermediate portion (intermediate frame portion 13). In the example shown, each intermediate coupling portion 53 is coupled to the body intermediate portion 62a as the intermediate portion of the body portion 62 of the corresponding front side member 60 in the vehicle front-rear direction.

In the example shown, each intermediate coupling portion 53 is disposed in a region including the center position between the front end position of one of the pair of side frames 10 and the center position of the corresponding coupling portion 51 (rear coupling portion 54) provided at the end portion of the frame body 20. Specifically, the front coupling portions 52 are set near the front ends of the side frames 10 (front frame portions 11) as described above, and central axis lines 54b of the bolts 54a of the rear coupling portions 54 passes through the center positions of the rear coupling portions 54. The intermediate coupling portion 53 is disposed in a region overlapping a center line X passing through the center between the front end position of the side frame 10 and the central axis line 54b of the bolt 54a of the rear coupling portion 54. As a result, at each vehicle-width-direction outer portion of the suspension frame 50, the three coupling portions 51 (front coupling portion 52, intermediate coupling portion 53, and rear coupling portion 54) are disposed at substantially equal intervals in the vehicle front-rear direction. Accordingly, in the example shown, substantially central portions of the side frames 10 in the vehicle front-rear direction are coupled, through the intermediate coupling portions 53, to the body intermediate portions 62a that are the substantially central portions of the body portions 62 of the front side members 60 in the vehicle front-rear direction, which protrude toward the front side beyond the panel front surface portion 1a.

In the example shown, the intermediate coupling portions 53 are located on the vehicle front side relative to the front arm holding portions 31. The intermediate coupling portions 53 and the front arm holding portion 31 are both provided at the intermediate frame portion 13. Specifically, each intermediate coupling portion 53 is disposed at a front portion of the upper surface 13a of the corresponding intermediate frame portion 13, each front arm holding portion 31 is disposed at the rear portion of the outer surface 10a at the corresponding intermediate frame portion 13 as described above, and the intermediate coupling portion 53 is adjacently disposed on the front side of the front arm holding portion 31 at the intermediate frame portion 13.

In the example shown, each front arm holding portion 31 is joined to a rear portion of the corresponding intermediate coupling portion 53. An upper portion of a front portion of the front holding plate 31a on the front side projects upward of the upper surface 13a of each intermediate frame portion 13 and is joined to the rear portion of the corresponding intermediate coupling portion 53. Specifically, an upper portion of the intermediate coupling portion 53 is curved outward in the vehicle width direction and projects outward in the vehicle width direction beyond the outer surface 10a at the intermediate frame portion 13, and a vehicle-width-direction outer portion of a lower portion of the intermediate coupling portion 53 also projects outward in the vehicle width direction beyond the outer surface 10a at the intermediate frame portion 13. The upper portion of the front portion of the front holding plate 31a on the front side is joined to the rear surface of the lower portion of the intermediate coupling portion 53 by arc welding or the like.

In the example shown, the intermediate coupling portions 53 are metal members welded to the intermediate frame portions 13 of the side frames 10. Attachment brackets 63 are joined by spotwelding or the like to parts corresponding to the intermediate coupling portions 53 on the lower surfaces of the front side members 60 (that is, the body intermediate portions 62a of the body portion 62). Each attachment bracket 63 is made of a steel plate member subjected to press working or the like and formed in a box shape open upward. Upper portions of the intermediate coupling portions 53 are detachably fastened to lower portions of the attachment brackets 63 through the bolts 53a. In other words, intermediate portions of the side frames 10 are detachably fastened to the lower portions of the attachment brackets 63 through the bolts 53a at the intermediate coupling portions 53. Accordingly, the intermediate portions of the side frames 10 are detachably coupled to the front side members 60 as the vehicle body structure member through the bolts 53a and the attachment brackets 63 at the intermediate coupling portions 53 and fixed to intermediate portions of the front side members 60.

In the example shown, the rear coupling portions 54 are set at the protrusion portions 22 of the frame body 20. In other words, the rear coupling portions 54 are set at the rear arm holding portions 32. Bottom portions of bulged plates 64 are placed on the upper surfaces of portions including the rear coupling portions 54 (that is, the upper surfaces of the upper rear holding plates 32a). The bulged plates 64 are made of steel plates bulged toward the vehicle lower side and joined to the lower surfaces of the rear portions (rear curved portions 61) of the front side members 60. The lower surfaces of the front portions of the rear curved portions 61 are tilted toward the vehicle upper side as they extend toward the vehicle front side. Upper portions of the bulged plates 64 are tilted along the lower surfaces of the rear curved portions 61. Flanges are formed at peripheral edges of the upper portions of the bulged plates 64 and joined to the lower surfaces of the rear curved portions 61 by spotwelding or the like. Flat seating surfaces 64a in contact with the upper surfaces of the protrusion portions 22 are formed at bottom portions of the bulged plates 64. End portions (protrusion portions 22) of the frame body 20 in the vehicle width direction are detachably fastened to the bottom portions of the bulged plates 64 through the bolts 54a penetrating through the protrusion portions 22 of the frame body 20 and the bottom portions of the bulged plates 64 at the rear coupling portions 54. Accordingly, the end portions of the frame body 20 in the vehicle width direction are detachably coupled to the front side members 60 as the vehicle body structure member through the bolts 54a at the rear coupling portions 54 and fixed to the rear portions of the front side members 60.

In the example shown, the rear coupling portions 54 also function as the rear arm holding portions 32. The bolts 54a for coupling the rear coupling portions 54 to the front side members 60 also function as the rear arm swing shaft portions 32b of the rear arm holding portions 32. Specifically, fastening central axis lines defined by the bolts 54a (central axis lines 54b of the bolts 54a) and swing central axis lines defined by the rear arm swing shaft portions 32b (central axis lines of the rear arm swing shaft portions 32b) are positioned on the same straight line. The bolts 54a (rear arm swing shaft portions 32b) are inserted into through-holes opened through the pair of rear holding plates 32a at the rear coupling portions 54 (rear arm holding portions 32) and also inserted into the bush collars 73. Distal end portions of the bolts 54a (rear arm swing shaft portions 32b) are inserted into through-holes opened through the bottom portions of the bulged plates 64, and screw portions at the end portions of the bolts 54a are screwed into nuts (not shown) provided on the upper surface side of the bottom portions of the bulged plates 64, and accordingly, the rear coupling portions 54 are fastened to the rear portions of the front side members 60. The vehicle-width-direction end portions (rear arm holding portions 32) of the frame body 20, the end portions sandwiching and swingably holding the rear end portions of the rear arm portions 72 of the suspension arms 70, are fastened in common with the front side members 60 (specifically, bulged plates 64) through the bolts 54a and nuts (not shown).

The suspension frame 50 is detachably attached to the front side members 60 through the bolts (52a, 53a, and 54a) at the front coupling portions 52, the intermediate coupling portions 53, and the rear coupling portions 54. Note that, in the example shown, the left front coupling portion 52 and the right front coupling portion 52 are connected by the radiator lower cross frame 4. The radiator lower cross frame 4 extends in the vehicle width direction below the bumper member 2 and the suspension frame 50. End portions of the radiator lower cross frame 4 in the vehicle width direction are detachably attached to the front coupling portions 52 through the bolts 52a in a state of being in contact with the lower surfaces of the front coupling portions 52 of the side frames 10 in the suspension frame 50. In other words, the lower end portion of the radiator support brace 3 is fastened together (that is, fastened in common) with the front end portions of the side frames 10 and the radiator lower cross frame 4 through the bolts 52a.

The plurality of support members 80 include side support members 81 disposed on the pair of side frames 10, respectively. Accordingly, the plurality of support members 80 include two side support members 81.

In the example shown, the plurality of support members 80 include the two side support members 81 and a rear support member 82 disposed on the frame body 20. The support members 80 (81 and 82) are mainly made of metal members and rubber members. The support members 80 are attached (fixed) on the suspension frame 50 and supported from below by the suspension frame 50. Most of each support member 80 is made of a solid metal member and has relatively high rigidity. The support members 80, the side support members 81, and the rear support member 82 are also referred to as motor mounts, side motor mounts, and a rear motor mount, respectively.

The side support members 81 are fixed on the front portion (front frame portions 11) of the side frames 10 of the suspension frame 50. As described above, the side frames 10 are bent in crank shapes at the intermediate portions of the side frames 10 in the longitudinal direction such that the front frame portions 11 are located upward of the rear frame portions 12. Accordingly, the side support members 81 are fixed to front portions of the side frames 10 at high positions in height from the ground surface (in the example shown, highest portions) and protrude upward.

The rear support member 82 is fixed to the upper surface of a vehicle-width-direction central portion of a rear end portion of the suspension frame 50, that is, a vehicle-width-direction central portion of the frame body 20. In other words, the rear support member 82 is disposed at the vehicle-width-direction center of a portion (frame body 20) of the suspension frame 50 between the left and right rear arm holding portions 32 (rear coupling portions 54).

In the example shown, a front portion of a right portion of the drive unit M is supported by the right side support member 81, a front portion of a left portion of the drive unit M is supported by the left side support member 81, and a rear portion of the drive unit M is supported by the rear support member 82. In this manner, the plurality of support members 80 are disposed so as to surround the drive unit M. The drive unit M is supported by the suspension frame 50 in the form of being supported at three points by the three support members 80 (81 and 82) fixed to the upper surface of the suspension frame 50.

The drive unit M includes a drive shaft portion M1 that transfers drive power to the front wheels. The drive shaft portion M1 extends outward in the vehicle width direction from each of left and right side portions. As shown in Figure 2, the drive shaft portion M1 is provided so as to pass between each side frame 10 and the corresponding front side member 60. Specifically, the drive shaft portion M1 is located between the rear portion of the side frame 10 and the front side member 60 in side view when viewed in the vehicle width direction. More specifically, in the example shown, the drive shaft portion M1 extends in the vehicle width direction directly above the front arm holding portions 31. A bush 80a that supports a metal mount shaft portion M2 extending from the drive unit M side is attached each support member 80 (81 and 82), and each support member 80 supports the drive unit M by supporting the mount shaft portion M2 with the bush 80a.

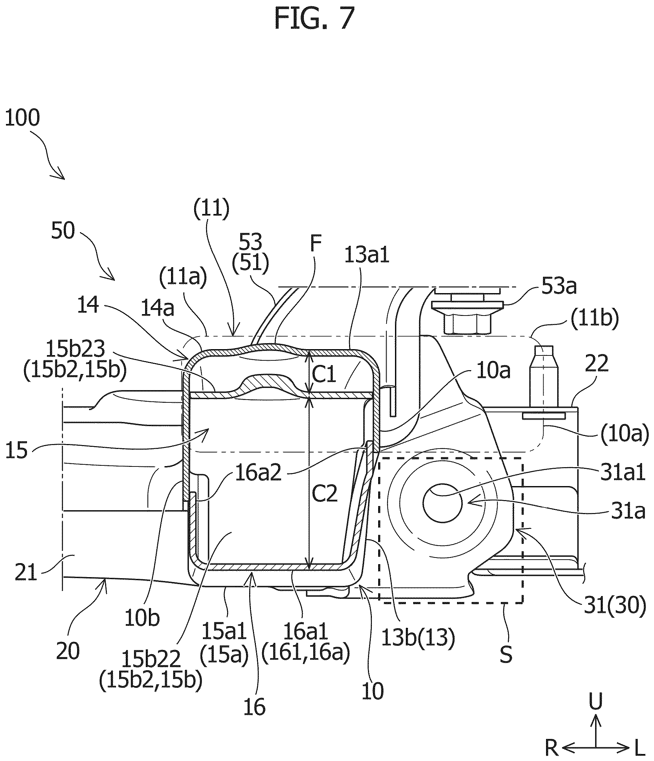

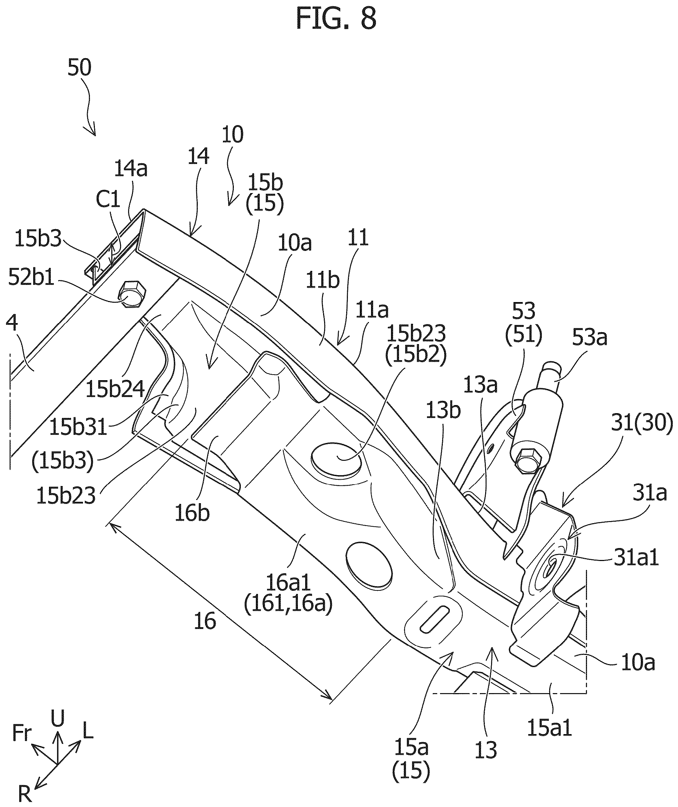

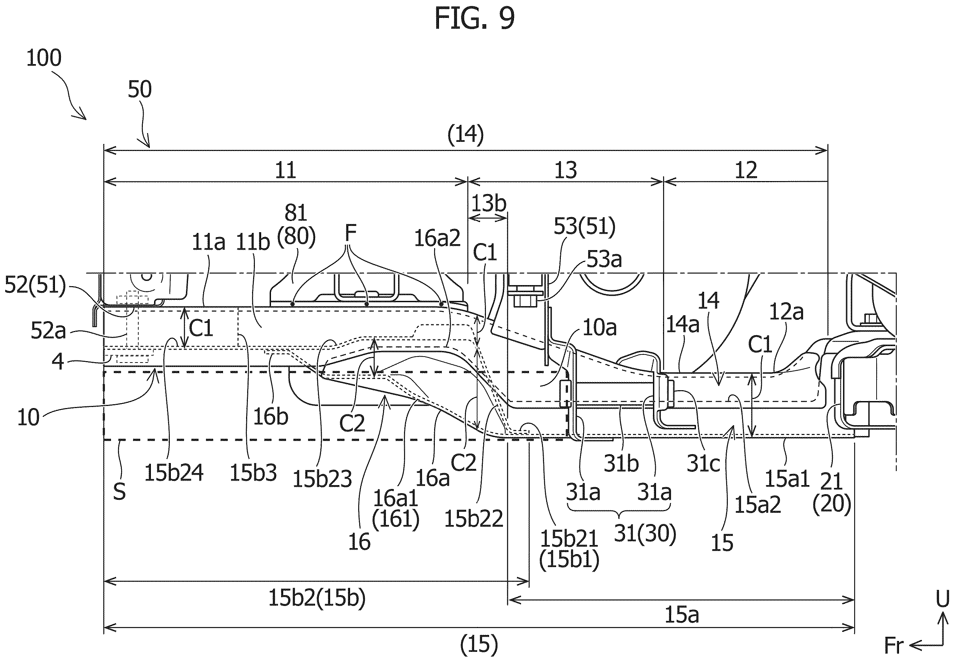

The outer shape and the like of each side frame 10 will be described next in more detail. Figure 7 is a cross-sectional view of the intermediate portion (intermediate frame portion 13) of the side frame 10 along line A-A shown in Figure 4. Figure 8 is an enlarged perspective view of the front portion (front portion) of the side frame 10 when viewed obliquely from below, and Figure 9 is a side view for description of the internal structure of the side frame 10. Note that, in Figure 7, a schematic outer shape of the front frame portion 11 is shown with dashed and double-dotted lines for describing the positional relationship between the front frame portion 11 and the intermediate frame portion 13.

As shown in Figures 2, 4, and 6 to 9, a vehicle-width-direction outer portion 11b of the front frame portion 11 projects outward beyond the outer surface 10a at the intermediate frame portion 13 in the vehicle width direction and is located on the vehicle upper side relative to a front region S of the front arm swing shaft portion 31b. Accordingly, as shown in Figure 7, the front arm swing shaft portion 31b and the front region S of the shaft insertion hole 31a1 are not blocked by the front frame portion 11 when viewed from the vehicle front side. Accordingly, the front region S is provided directly below the vehicle-width-direction outer portion 11b of the front frame portion 11, as a space through which the front arm holding portion 31 is accessible from the front side relative to the front end of the side frame 10.

During assembly, a worker or a robot can access the shaft insertion hole 31a1 from directly in front of the front arm holding portion 31 through the front region S and insert the front arm swing shaft portion 31b into the shaft insertion hole 31a1. Then, the worker or the robot can bring a tool close to the front arm swing shaft portion 31b through the front region S or the like, fasten the front arm swing shaft portion 31b by using the tool, and complete attachment of the front arm swing shaft portion 31b.

The outer surface 10a at the intermediate frame portion 13 and the outer surface 10a of the corresponding rear frame portion 12 continuously and linearly extend substantially in the vehicle front-rear direction, and the outer surface 10a of the front frame portion 11 is curved outward in the vehicle width direction from near the front end of the intermediate frame portion 13 and located outside the outer surface 10a at the intermediate frame portion 13 and the outer surface 10a of the rear frame portion 12. Accordingly, the vehicle-width-direction outer portion 11b of the front frame portion 11 projects outward in the vehicle width direction beyond the outer surface 10a at the intermediate frame portion 13 and the outer surface 10a of the rear frame portion 12. Moreover, an inner surface 10b of the front frame portion 11 and the inner surface 10b of the intermediate frame portion 13 continuously and linearly extend substantially in the vehicle front-rear direction.

In the present embodiment, the width of the intermediate frame portion 13 in the vehicle width direction is set to be less than the width of each of the front frame portion 11 and the rear frame portion 12 in the vehicle width direction, and the width of the intermediate frame portion 13 in the vehicle up-down direction (in other words, overall height) is set to be greater than the width of each of the front frame portion 11 and the rear frame portion 12 in the vehicle up-down direction (in other words, overall height). The outer surface 10a of the front frame portion 11 and the inner surface 10b of the rear frame portion 12 are both curved in the vehicle width direction. In the example shown, each of the front frame portion 11 and the rear frame portion 12 has a vehicle-width-direction width up to about twice the width of the intermediate frame portion 13 in the vehicle width direction (refer to Figure 4), and the intermediate frame portion 13 has a vehicle-up-down-direction width up to about twice the width of each of the front frame portion 11 and the rear frame portion 12 in the vehicle up-down direction (refer to Figure 2).

The internal structure and the like of the side frames 10 will be described next.

As shown in Figures 7 to 9 and the like, each of the pair of side frames 10 includes an upper member 14, a lower member 15 and a reinforcement portion 16. Each of the upper member 14 and the lower member 15 extends across the entire range of the side frame 10 from the front end to the rear end.

The upper member 14 constitutes an upper portion of the side frame 10 and extends in the vehicle front-rear direction. In the example shown, the upper member 14 is a member made of a single steel plate component that is continuous in the front-rear direction. For example, the upper member 14 has a groove section opened toward the vehicle lower side and extends in the vehicle front-rear direction. Accordingly, the upper member 14 includes an outer sidewall constituting part of the outer surface 10a of the side frame 10, an inner sidewall constituting part of the inner surface 10b of the side frame 10, and an upper wall 14a constituting an upper wall of the side frame 10.

The lower member 15 is a member joined to the upper member 14 from below and extending in the vehicle front-rear direction. The lower member 15 forms the closed sectional structure C1, which is tubular in sectional view orthogonal to the vehicle front-rear direction, cooperatively with the upper member 14. The upper member 14 and the lower member 15 are joined to each other, and accordingly, the tubular closed sectional structure C1, specifically, the substantially quadrilateral closed sectional structure C1 (in other words, rectangular tubular hollow structure) is formed. The closed sectional structure C1 is provided across the entire side frame 10 in the vehicle front-rear direction. The thickness of the closed sectional structure C1 in the up-down direction is determined in accordance with the spacing distance between the upper member 14 and the lower member 15 in the up-down direction and largely changes at the intermediate frame portion 13 as shown in Figure 9.

In the present embodiment, the lower member 15 is constituted by a plurality of members. The lower member 15 includes a rear member 15a and a front member 15b. The lower member 15 is constituted by the rear member 15a and the front member 15b. Accordingly, the lower member 15 is constituted by two components separated in the front-rear direction. Specifically, a rear portion of the lower member 15 is constituted by the rear member 15a, and a front portion of the lower member 15 is constituted by the front member 15b.

The rear member 15a is constituted by a member extending from the rear end of the lower member 15 to a predetermined position of the intermediate frame portion 13 and separated from the front member 15b. In the example shown, the rear member 15a has a groove section opened toward the vehicle upper side and extends in the vehicle front-rear direction. Accordingly, the rear member 15a includes an outer sidewall constituting part of the outer surface 10a of the side frame 10, an inner sidewall constituting part of the inner surface 10b of the side frame 10, and a lower wall 15a1 constituting part of a lower wall of the side frame 10. An upper portion of the rear member 15a of the lower member 15 is fitted inside a lower portion of the upper member 14 and is joined to the lower portion of the upper member 14 by arc welding or the like. Specifically, a sidewall upper portion 15a2 of the rear member 15a is joined to the lower portion of the upper member 14, in a state of overlapping a sidewall lower portion of the upper member 14 from inside. In other words, the lower member 15 is joined to the lower portion of the upper member 14 at the rear member 15a so as to block the lower opening of the upper member 14, thereby forming the closed sectional structure C1 cooperatively with the upper member 14.

The front member 15b is a member extending from the front end of the lower member 15 to a predetermined position of the intermediate frame portion 13. The front member 15b includes a rear end portion 15b1 joined to the rear member 15a. In the example shown, the rear end portion 15b1 of the front member 15b is joined to the lower wall 15a1, in a state of overlapping the upper surface of the lower wall 15a1 of the rear member 15a in the intermediate frame portion 13.

In the present embodiment, the rear end portion 15b1 of the front member 15b is located below the corresponding intermediate coupling portion 53. Accordingly, the rear end portion 15b1 of the front member 15b is joined to the rear member 15a directly below the intermediate coupling portion 53. In the example shown, the front member 15b rises from the rear end portion 15b1 to the inside of the upper member 14 and extends substantially toward the vehicle front side inside the upper member 14.

Specifically, the front member 15b is constituted by a plate portion 15b2 and a front end inner wall 15b3. The plate portion 15b2 is a portion constituting most of the front member 15b, has a width in accordance with the width of the side frame 10 in the vehicle width direction, extends in the vehicle front-rear direction, and is bent in the up-down direction at a plurality of places in the front-rear direction. In the example shown, a recessed part that is recessed toward the vehicle width direction outer side and the vehicle rear side is formed at a portion inside the front end of the side frame 10. The front end inner wall 15b3 constitutes the inner sidewall of the side frame 10 at the recessed part. The front end inner wall 15b3 extends upward from a front end portion of an inner portion of the plate portion 15b2 and has a substantially L-shaped section. The front end inner wall 15b3 is joined by arc welding or the like to the upper member 14 through an upper end flange piece 15b31 (refer to Figure 8) provided at the upper end of the front end inner wall 15b3.

More specifically, the plate portion 15b2 includes a rear flange piece 15b21, a tilted plate piece 15b22, a front-rear plate piece 15b23, and a front end plate piece 15b24.

The rear flange piece 15b21 extends in the vehicle width direction along the upper surface of the lower wall 15a1 of the rear member 15a and extends in the vehicle front-rear direction. The rear flange piece 15b21 constitutes the rear end portion 15b1 of the front member 15b.

The tilted plate piece 15b22 extends so as to rise from the front end of the rear flange piece 15b21 to the inside of the lower member 15. The tilted plate piece 15b22 is tilted so as to approach the upper wall 14a of the upper member 14 as it extends from the rear side toward the front side. The rear end of the tilted plate piece 15b22 is located below the intermediate coupling portion 53. The tilted plate piece 15b22 is disposed in a region close to the front end of the intermediate frame portion 13. In the example shown, the tilted plate piece 15b22 is tilted at a tilt angle steeper than that of the upper wall 14a of the upper member 14 at the intermediate frame portion 13 (in other words, the upper surface 13a).

The front-rear plate piece 15b23 extends from the upper end of the tilted plate piece 15b22 to the rear end of the front end inner wall 15b3. Inside the upper member 14, the tilted plate piece 15b22 and the front-rear plate piece 15b23 is joined to a sidewall of the upper member 14 by arc welding or the like with each end portion in the vehicle width direction being in contact with the sidewall of the upper member 14. In other words, by being fitted inside the upper member 14 and joined to the upper member 14, the tilted plate piece 15b22 and the front-rear plate piece 15b23 at the front member 15b of the lower member 15 form the closed sectional structure C1 cooperatively with the upper member 14.

The front end plate piece 15b24 extends from the front end of the front-rear plate piece 15b23 to the front end of the front member 15b (plate portion 15b2) and extends outward in the vehicle width direction from the lower end of the front end inner wall 15b3. The front end plate piece 15b24 constitutes a lower wall at a front end portion of the front member 15b. The front end plate piece 15b24 is joined to the outer sidewall of the upper member 14 in the vehicle width direction by arc welding or the like in a state in which an inner end portion in the vehicle width direction is connected to the lower end of the front end inner wall 15b3 and an outer end portion in the vehicle width direction is in contact with the outer sidewall of the upper member 14. In other words, by being joined to the upper member 14, the front end plate piece 15b24 and the front end inner wall 15b3 at the front member 15b of the lower member 15 form the closed sectional structure C1 cooperatively with the upper member 14.

The reinforcement portion 16 includes an opposite wall 161 spaced downward from and facing the lower surface of the front portion (here, front member 15b) of the lower member 15. The reinforcement portion 16 forms, at least cooperatively with the front portion (front member 15b) of the lower member 15, a lower closed sectional structure C2 that is tubular in sectional view orthogonal to the vehicle front-rear direction, the lower closed sectional structure C2 overlapping the closed sectional structure C1 from below. In the example shown, the opposing wall 161 is spaced downward from and facing the lower surfaces of the tilted plate piece 15b22 and the front-rear plate piece 15b23.

In the present embodiment, the reinforcement portion 16 is constituted by a member integrated with or separated from the rear member 15a and forms the lower closed sectional structure C2 at least cooperatively with the front member 15b, the lower closed sectional structure C2 overlapping the closed sectional structure C1 from below. In the example shown, the reinforcement portion 16 is constituted by a member integrated with the rear member 15a. In the example shown, the rear member 15a extends from the rear end of the lower member 15 to the vicinity of the front end of the intermediate frame portion 13 in the intermediate frame portion 13. The reinforcement portion 16 is formed integrally with the rear member 15a so as to be extended from the rear member 15a to the front side.

The reinforcement portion 16 is extended up to a predetermined position of the front frame portion 11, and the lower closed sectional structure C2 is extended up to a region below the corresponding side support member 81. Accordingly, the side support member 81 is fixed on a portion of the upper member 14, the portion being located above the lower closed sectional structure C2. In the example shown, the reinforcement portion 16 extends from the front end of the rear member 15a to a position corresponding to directly below the front end of the side support members 81 at the front member 15b, and is joined to the front member 15b.

In the example shown, the reinforcement portion 16 includes an extension portion 16a and a front flange piece 16b. The extension portion 16a has a groove section opened toward the vehicle upper side and extends in the vehicle front-rear direction. Accordingly, the extension portion 16a includes an outer sidewall constituting part of the outer surface 10a of the side frame 10, an inner sidewall constituting part of the inner surface 10b of the side frame 10, and a lower wall 16a1 constituting part of the lower wall of the side frame 10. The lower wall 16a1 constitutes the opposing wall 161. An upper portion of the reinforcement portion 16 is fitted inside the lower portion of the upper member 14 so as to overlap the front member 15b from below, and is joined to the lower portion of the upper member 14 by arc welding or the like. Specifically, the sidewall upper portion 16a2 is joined to the lower portion of the upper member 14 in a state in which the opposing wall 161 (lower wall 16a1) of the reinforcement portion 16 is located below the front member 15b and a sidewall upper portion 16a2 of the reinforcement portion 16 overlaps the sidewall lower portion of the upper member 14 from inside. Accordingly, in the example shown, the tubular lower closed sectional structure C2, specifically, the substantially quadrilateral lower closed sectional structure C2 (in other words, rectangular tubular hollow structure) is formed. In other words, by being joined to the lower portion of the upper member 14 in a state in which the opposing wall 161 at the extension portion 16a faces the front member 15b, the reinforcement portion 16 forms the lower closed sectional structure C2 cooperatively with sidewalls of the front member 15b and the upper member 14.

The front flange piece 16b extends forward from the front end of the extension portion 16a. The front flange piece 16b is in contact with the lower surface of the front member 15b (front-rear plate piece 15b23) and joined to the front member 15b by arc welding or the like.

In the present embodiment, the rear end portion 15b1 of the front member 15b and a rear end portion of the reinforcement portion 16 are located below the intermediate coupling portion 53, and a rear portion of the lower closed sectional structure C2 is disposed below the intermediate coupling portion 53. In the example shown, the rear flange piece 15b21 (rear end portion 15b1) of the front member 15b and a rear end portion of the extension portion 16a of the reinforcement portion 16 are located below the intermediate coupling portion 53, and the rear portion of the lower closed sectional structure C2 overlaps the closed sectional structure C1 from below on the lower side of the intermediate coupling portion 53.

In the present embodiment, each side support member 81 is fixed to the upper member 14 and the front portion (specifically, the front member 15b) of the lower member 15 at least at one of a plurality of fixation points F to the upper member 14 (specifically, the front frame portion 11). In the example shown, the fixation points F are provided at three places spaced from each other in the vehicle front-rear direction. The middle fixation point F is located outward of the front fixation point F and the rear fixation point F in the vehicle width direction and is set on the vehicle-width-direction outer portion 11b of the front frame portion 11 protruding outward beyond the outer surface 10a at the intermediate frame portion 13. In the example shown, the upper end of the tilted plate piece 15b22 and a rear portion of the front-rear plate piece 15b23 are located near the upper wall 14a of the upper member 14. A portion corresponding to the rear fixation point F at the rear portion of the front-rear plate piece 15b23 bulges toward the vehicle upper side. At the rear fixation point F, the side support members 81 is fixed to the upper wall 14a of the upper member 14 and the rear portion of the front-rear plate piece 15b23 of the front member 15b through a not shown fastening tool such as a bolt.

In the vehicle front structure 100 configured as described above, each side frame 10 is formed by the tubular closed sectional structure C1, that is, a hollow structure constituted by the upper member 14 and the lower member 15, and thus weight reduction can be achieved.

The side frame 10 further includes the reinforcement portion 16 including the opposite wall 161 spaced downward from and facing the lower surface of the front member 15b. The reinforcement portion 16 forms, at least cooperatively with the front portion (front member 15b) of the lower member 15, the lower closed sectional structure C2 that is tubular in sectional view orthogonal to the vehicle front-rear direction, the lower closed sectional structure C2 overlapping the closed sectional structure C1 from below, and the plurality of support members 80 include a side support member 81 fixed on the portion of the upper member 14, the portion being located above the lower closed sectional structure C2. Accordingly, two upper and lower closed sectional structures (C1 and C2) are formed below the side support member 81. As a result, improvement in support rigidity and the like for the drive unit M and the suspension frame 50 and improvement in NVH performance (reduction in vibration, noise, and rattling) can be achieved. As described above, the vehicle front structure 100 according to the present embodiment includes a structure capable of improving support rigidity for the drive unit M.

In the present embodiment, the coupling portions 51 to the front side member 60 are provided at the front and intermediate portions (the front frame portion 11 and the intermediate frame portion 13) of each of the pair of side frames 10 in the vehicle front-rear direction, and the end portions of the frame body 20 of the suspension frame 50 in the vehicle width direction, respectively. Accordingly, coupling points (fixation points) of the vehicle-width-direction outer portions of the suspension frame 50 to the vehicle body (front side member 60) are set not only near both end portions in the vehicle front-rear direction but also at the intermediate portion (intermediate frame portion 13) of the side frame 10 where deflection is likely to occur. The intermediate coupling portions 53 provided at the intermediate frame portions 13 protrude upward from the upper surfaces 13a of the intermediate frame portions 13. Thus, as compared to a conventional structure in which fixation points of the vehicle-width-direction outer portions of the suspension frame to the vehicle body are set only near both end portions in the vehicle front-rear direction, the vehicle front structure 100 can achieve improvement in support rigidity for the drive unit M and the suspension frame 50 (in particular, the intermediate frame portions 13) because of the intermediate coupling portions 53 of the coupling portions 51. As a result, a deflection amount (for example, displacement in the up-down direction) of the intermediate frame portion 13 to which loads from front end portions of the suspension arms 70 (front arm portions 71) can be input can be reduced, and thus, it is possible to further improve support rigidity for the drive unit M and reduce vibration of the suspension frame 50.

In the present embodiment, the rear portions of the lower closed sectional structures C2 are disposed below the intermediate coupling portions 53. Accordingly, the rigidity of the intermediate portion (intermediate frame portion 13) of the side frame 10 against deflection (displacement in the up-down direction) and torsion improves, and improvement in support rigidity for the drive unit M and the suspension frame 50, improvement in the vehicle body rigidity of the vehicle front portion, and improvement in NVH performance are more effectively achieved.

In the present embodiment, the rear portions of the two upper and lower closed sectional structures (C1 and C2) are located at a front portion of the intermediate frame portion 13. As a result, improvement in the strength of the intermediate frame portion 13 and increase in a buckling load (load with which buckling occurs to the side frame 10) of the side frame 10 during frontal collision are achieved.

In the present embodiment, the side support member 81 is fixed to the upper member 14 and the front portion of the lower member 15 at least at one of the plurality of fixation points F to the upper member 14. Accordingly, improvement in support rigidity for the drive unit M and the suspension frame 50 and the like is further effectively achieved. In addition, rigidity against torsion of the side frames 10 along with inclination of the side support members 81 improves, which further improves NVH performance.

In the present embodiment, since each side frame 10 includes the front frame portion 11, the rear frame portion 12, and the intermediate frame portion 13 and is vertically bent in a crank shape at an intermediate portion in the longitudinal direction, the rigidity of the intermediate portion (intermediate frame portion 13) of the side frame 10 in the vehicle front-rear direction against a load in the up-down direction is increased by the crank-shaped bent structure. Accordingly, even when the side support members 81 supporting the drive unit M are fixed on the side frames 10 (front frame portions 11), the side frames 10 can easily ensure support rigidity capable of withstanding a load of the drive unit M.

Moreover, the front arm holding portions 31 swingably holding the front end portions of the suspension arms 70 through the front arm swing shaft portions 31b extending in the vehicle front-rear direction are provided on the vehicle-width-direction outer surfaces 10a of the intermediate frame portions 13, and the vehicle-width-direction outer portions 11b of the front frame portions 11 project outward beyond the outer surfaces 10a at the intermediate frame portion 13 in the vehicle width direction and are located on the vehicle upper side relative to the front regions S of the front arm swing shaft portions 31b. Accordingly, spaces (front regions S) for accessing the front arm holding portions 31 from directly in front are ensured forward of the front arm holding portions 31 and below the front frame portions 11. As a result, during assembly, a worker or a robot can access the shaft insertion holes 31a1 from directly in front of the front arm holding portions 31 through the front regions S and easily attach the front arm swing shaft portions 31b to the front arm holding portions 31, and accordingly, assemblability is improved. Moreover, it is not necessary to move the positions of the front arm swing shaft portions 31b outward in the vehicle width direction in order to improve assemblability, and thus, the freedom of arm design can be improved.

In the vehicle front structure 100, the vehicle-width-direction outer portions 11b of the front frame portions 11 to which the side support members 81 are fixed project outward beyond the outer surfaces 10a at the intermediate frame portions 13 in the vehicle width direction. In other words, the outer surfaces 10a at the intermediate frame portions 13 where the front arm holding portions 31 are provided are closer to the vehicle-width-direction inner side than the outer surfaces 10a at the front frame portions 11. Thus, with the vehicle front structure 100, in a vehicle having limitation on a maximum vehicle width, it is possible to have relatively long vehicle-width-direction dimensions of the suspension arms 70 while ensuring a relatively long supporting span of the drive unit M by the left and right side support members 81 within the limited range of the vehicle width. Accordingly, it is possible to ensure long arm lengths of the suspension arms 70 in the vehicle width direction while ensuring a long supporting span of the drive unit M.

The side support members 81 and the side frames 10 need to have a reaction force (supporting force) that resists a predetermined moment from the drive unit M. In this regard, in the vehicle front structure 100, it is possible to ensure a relatively long distance from the gravity position of the drive unit M to the side support members 81 (that is, mount support points) along with increase in the supporting span of the drive unit M in the vehicle width direction, and thus, it is possible to reduce reaction forces required for the side support members 81 and the side frames 10. As a result, loads on the side support members 81 are reduced, and supporting performance by the left and right side support members 81 can be easily ensured. Moreover, since the side support members 81 having sufficient margins against loads can be easily employed, improvement in stability and durability and improvement in NVH performance (reduction in vibration, noise, and rattling) can be achieved. Furthermore, size limitation of the drive unit M can be relaxed and a larger drive unit M can be mounted. Accordingly, it is preferable to set the mount support points as far as possible from the gravity position of the drive unit M and increase the supporting span of the drive unit M, and the vehicle front structure 100 has a preferable structure for increase in the supporting span of the drive unit M. In addition, since long arm lengths are ensured for the suspension arms 70, the change amount of tire alignment during driving can be reduced, and improvement in steering stability or the like due to reduction in the change amount of tire alignment can be achieved.

In the vehicle front structure 100, since the front frame portions 11 are located on the vehicle upper side relative to the rear frame portions 12, it is possible to easily ensure the approach angle of the vehicle and a ground clearance in front of tires and improve climbing performance over a curb or the like. Moreover, since coupling points (front coupling portions 52) of the front frame portions 11 to the front side members 60 are closer to the front side members 60, it is also advantageous in terms of rigidity assurance and cost reduction. In addition, since the side support members 81 are fixed on the front frame portions 11, the lengths of the side support members 81 in the up-down direction can be relatively shortened. Thus, it is possible to achieve reduction of manufacturing cost due to size reduction of the side support members 81, weight reduction of the side support members 81, rigidity improvement of the side support members 81, and vibration reduction of the side support members 81, and it is possible to achieve an advantageous effect for vibration reduction.

In the present embodiment, each intermediate frame portion 13 includes the tilted portion 13b that is tilted toward the vehicle upper side as the tilted portion extends toward the vehicle front side. As a result, when an impact load due to collision is input to the front end portions of the side frames 10 during a frontal collision, it is possible to promote generation of deformation that displaces the rear portions of the side frames 10 downward due to the impact load, and thus, it is possible to improve impact relaxation and safety of the passenger compartment P2.

In the present embodiment, the width of the intermediate frame portions 13 in the vehicle width direction is set to be less than the width of each of the front frame portions 11 and the rear frame portions 12 in the vehicle width direction. Thus, in the vehicle front structure 100, the outer surfaces 10a of the side frames 10 at the intermediate frame portions 13 can be disposed close to the vehicle-width-direction inner side. As a result, the gap between the outer surface 10a at each intermediate frame portion 13 and a front portion of the corresponding front wheel during steering can be easily ensured to achieve increase in the maximum steering angle and a compact turning radius, and convenience of the vehicle can be improved. Moreover, the inner surfaces 10b of the side frames 10 at the intermediate frame portions 13 can be disposed outward in the vehicle width direction together with the inner surfaces 10b at the front frame portions 11 and the rear frame portions 12. As a result, size limitation of the drive unit M can be easily reduced, and a relatively large drive unit M can be easily mounted even in a compact vehicle, and thus, the freedom of drive-unit designing can be improved. Furthermore, in the present embodiment, the width of the intermediate frame portions 13 in the vehicle up-down direction is set to be larger than the width of each of the front frame portions 11 and the rear frame portions 12 in the vehicle up-down direction. Thus, the strength and rigidity of the intermediate frame portions 13 in the up-down direction can be easily ensured even when the width of the intermediate frame portions 13 in the vehicle width direction is small (narrow).

In the present embodiment, the rear portion of the lower member 15 is constituted by the rear member 15a extending from the rear end of the lower member 15 to a predetermined position of the intermediate frame portion 13, the front portion of the lower member 15 is constituted by the front member 15b including the rear end portion 15b1 extending from the front end of the lower member 15 to a predetermined position of the intermediate frame portion 13 and joined to the rear member 15a, and the reinforcement portion 16 is constituted by a member integrated with the rear member 15a and forms the lower closed sectional structure C2 at least cooperatively with the front member 15b, the lower closed sectional structure C2 overlapping the closed sectional structure C1 from below. In this manner, the number of components can be reduced by forming the reinforcement portion 16 integrally with the rear member 15a.

Description of the present embodiment is an example for description of the present invention and does not limit the invention as claimed in the claims. In addition, the configurations of components of the present invention are not limited to the above-described embodiment, and various modifications are possible within the technical scope in the claims.

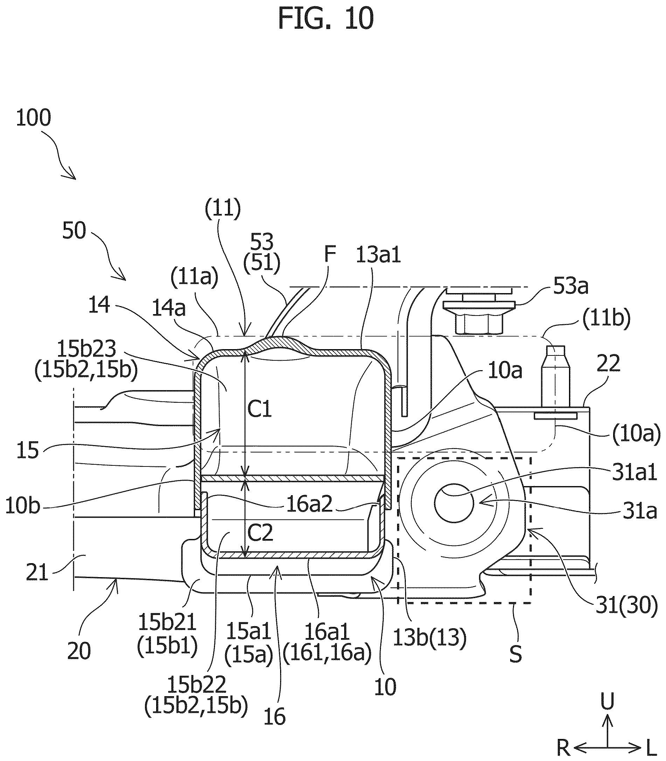

For example, in the present embodiment, the reinforcement portion 16 of each side frame 10 is constituted by a member integrated with the rear member 15a (rear portion) of the lower member 15, but may be constituted by a member separated from the rear member 15a (rear portion) as in a modification shown in Figures 10 to 12. Accordingly, the shape, thickness, material, and the like of the reinforcement portion 16 can be set without being restricted by a manufacturing process or the like of the rear member 15a, and the freedom of selecting the shape and the like of the reinforcement portion 16 can be improved.

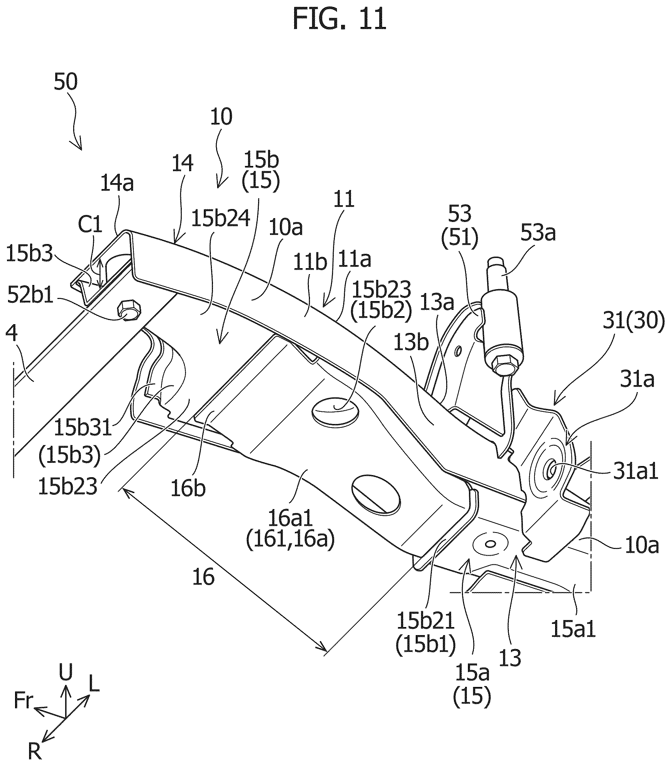

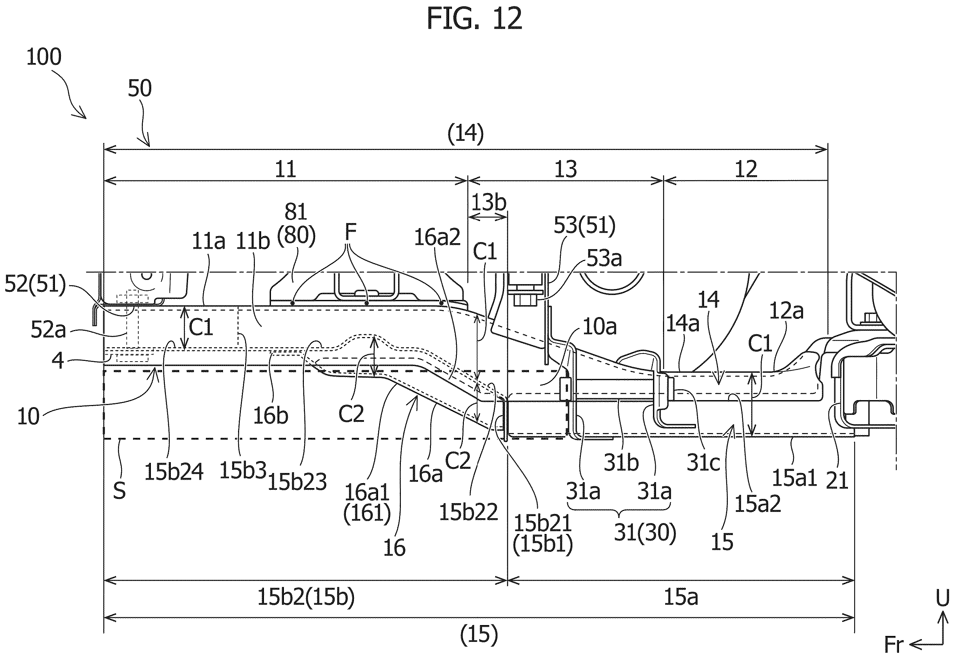

Figure 10 is a cross-sectional view of the intermediate portion (intermediate frame portion 13) of each side frame 10 according to the modification, Figure 11 is an enlarged perspective view of the front portion of the side frame 10 according to the modification when viewed obliquely from below, and Figure 12 is a side view for description of the internal structure of the side frame 10 according to the modification. The cross-sectional view of the intermediate frame portion 13 according to the modification shown in Figure 10 is a cross-sectional view at a position corresponding to line A-A shown in Figure 4. In the following, the vehicle front structure 100 according to the modification will be described with focus on any configuration different from that in the above-described embodiment.

As shown in Figures 10 to 12, in the modification, each reinforcement portion 16 is constituted by a member separated from the corresponding rear member 15a. The rear member 15a extends from the rear end of the lower member 15 to directly below the corresponding intermediate coupling portion 53.

In the modification, the rear end portion 15b1 of the front member 15b rises up to a lower portion inside the corresponding upper member 14, and inside the upper member 14, extends toward the vehicle front side substantially along the lower portion of the upper member 14. The rear end portion 15b1 of the front member 15b extends in the vehicle up-down direction and the vehicle width direction along the front end of the rear member 15a directly below the intermediate coupling portion 53. The rear flange piece 15b21 constituting the rear end portion 15b1 of the front member 15b is in contact with the front end of the rear member 15a and joined to the rear member 15a so as to block the front portion opening of the rear member 15a. The tilted plate piece 15b22 extends along a lower portion of the lower member 15 from the upper end of the rear flange piece 15b21 and is extended up to inside the front frame portion 11. The tilted plate piece 15b22 is tilted at a tilt angle approximately equal to that of the upper wall 14a (in other words, the upper surface 13a) of the upper member 14 at the intermediate frame portion 13. The front-rear plate piece 15b23 extends along the lower portion of the lower member 15 from the front end of the tilted plate piece 15b22 to the front side. Inside the upper member 14, the tilted plate piece 15b22 and the front-rear plate piece 15b23 are joined to the sidewall lower portion of the upper member 14 by arc welding or the like in a state in which end portions in the vehicle width direction are in contact the sidewall lower portion of the upper member 14. In other words, the tilted plate piece 15b22 and the front-rear plate piece 15b23 at the front member 15b of the lower member 15 are joined to the lower portion of the upper member 14 so as to block the lower portion opening of the upper member 14, similarly to the rear member 15a, and accordingly, form the closed sectional structure C1 cooperatively with the upper member 14. The thickness of the closed sectional structure C1 in the up-down direction in a region corresponding to the tilted plate piece 15b22 is maintained substantially constant as shown in Figure 12 and does not abruptly change.

In the modification, the upper end of the tilted plate piece 15b22 and the front-rear plate piece 15b23 are largely spaced from the upper wall 14a of the upper member 14. The side support members 81 are fixed only to the upper member 14 at the fixation points F to the front frame portion 11, but not fixed to the front member 15b.

In the modification, the reinforcement portion 16 is joined to the front surface of the rear end portion 15b1 of the front member 15b and extends forward from the front surface. The thickness of the tubular lower closed sectional structure C2 in the vehicle up-down direction, which is formed of the reinforcement portion 16, the front member 15b, and the upper member 14, is maintained substantially constant as shown in Figure 12 and does not abruptly change. In the example shown, the thickness of the lower closed sectional structure C2 in the vehicle up-down direction is less than the thickness of the closed sectional structure C1 in the vehicle up-down direction.

In the present embodiment and the above-described modification, the reinforcement portion 16 forms the lower closed sectional structure C2 cooperatively with sidewalls of the front member 15b and the upper member 14, but the present invention is not limited thereto. The reinforcement portion 16 may form the lower closed sectional structure C2 at least cooperatively with the front portion (front member 15b) of the lower member 15. For example, the upper end of the sidewall of the reinforcement portion 16 may be joined in contact with the lower surfaces of the tilted plate piece 15b22 and the front-rear plate piece 15b23 of the front member 15b such that the lower closed sectional structure C2 is formed only by the front member 15b. Moreover, if the front member 15b is formed so as to extend in the vehicle front-rear direction with a groove section open toward the vehicle upper side, similarly to the rear member 15a, the sidewall upper portion 16a2 of the reinforcement portion 16 may be joined to a sidewall lower portion of the front member 15b such that the lower closed sectional structure C2 is formed only by the front member 15b. Furthermore, although the upper member 14 is constituted by one member, the present invention is not limited thereto and the upper member 14 may be constituted by a plurality of members joined to one another. Although the lower member 15 is constituted by two members, the lower member 15 may be constituted by one member or three or more members. For example, when the lower member 15 is constituted by one member, a front end portion of the reinforcement portion 16 may be joined in contact with the lower surface of the front portion (portion corresponding to the front member 15b) of the lower member 15, and a rear end portion of the reinforcement portion 16 may overlap a front end portion of the rear portion (portion corresponding to the rear member 15a) of the lower member 15 from below, so that the lower closed sectional structure C2 can be formed at least cooperatively with the front portion of the lower member 15.

A vehicle to which the vehicle front structure 100 is applied is not limited to an electric vehicle and may be, for example, a vehicle including an internal combustion engine as a driving source.

### [Reference Signs List]

- 1: Dash panel
- 1a: Panel front surface portion
- 2: Bumper member
- 3: Radiator support brace
- 4: Radiator lower cross frame
- 10: Side frame
- 10a: Outer surface
- 10b: Inner surface
- 11: Front frame portion
- 11a: Upper surface
- 11b: Vehicle-width-direction outer portion
- 12: Rear frame portion
- 12a: Upper surface
- 13: Intermediate frame portion
- 13a: Upper surface
- 13b: Tilted portion
- 14: Upper member
- 14a: Upper wall
- 15: Lower member
- 15a: Rear member
- 15a1: Lower wall
- 15a2: Sidewall upper portion
- 15b: Front member
- 15b1: Rear end portion
- 15b2: Plate portion
- 15b21: Rear flange piece
- 15b22: Tilted plate piece
- 15b23: Front-rear plate piece
- 15b24: Front end plate piece
- 15b3: Front end inner wall
- 15b31: Upper end flange piece
- 16: Reinforcement portion
- 16a: Extension portion
- 16a1: Lower wall
- 16a2: Sidewall upper portion
- 16b: Front flange piece
- 161: Opposing wall
- 20: Frame body
- 21: Front wall
- 22: Protrusion portion
- 30: Arm holding portion
- 31: Front arm holding portion
- 31a: Front holding plate
- 31a1: Shaft insertion hole
- 31b: Front arm swing shaft portion (swing shaft portion)
- 31c: Nut
- 32: Rear arm holding portion
- 32a: Rear holding plate
- 32b: Rear arm swing shaft portion
- 50: Suspension frame
- 51: Coupling portion
- 52: Front coupling portion
- 52a: Bolt
- 53: Intermediate coupling portion
- 53a: Bolt
- 54: Rear coupling portion
- 54a: Bolt
- 54b: Central axis line
- 60: Front side member
- 61: Rear curved portion
- 62: Body portion
- 62a: Body intermediate portion
- 63: Attachment bracket
- 64: Bulged plate
- 64a: Seating surface
- 70: Suspension arm
- 71: Front arm portion
- 71a: Front bush
- 71b: Knuckle side ball joint
- 71b1: Joint shaft portion
- 72: Rear arm portion
- 72a: Rear bush
- 73: Bush collar
- 80: Support member
- 80a: Bush
- 81: Side support member
- 82: Rear support member
- 100: Vehicle front structure
- C1: Closed sectional structure
- C2: Lower closed sectional structure
- F: Fixation point
- M: Drive unit
- M1: Drive shaft portion
- M2: Mount shaft portion
- P1: Powertrain compartment
- P2: Passenger compartment
- S: Front region
- X: Center line

## Claims

1. A vehicle front structure comprising a suspension frame, the suspension frame including a pair of side frames, a frame body, and an arm holding portion, the pair of side frames extending in a vehicle front-rear direction at a lower portion of a vehicle front portion and being spaced from each other in a vehicle width direction, the frame body extending in the vehicle width direction and connecting rear portions of the pair of side frames, the arm holding portion swingably holding a suspension arm, a plurality of support members being attached to the suspension frame and supporting a drive unit configured to generate driving power,
**characterized in that**
each of the pair of side frames includes
an upper member constituting an upper portion of the side frame and extending in the vehicle front-rear direction,
a lower member joined to the upper member from below and extending in the vehicle front-rear direction, the lower member forming, cooperatively with the upper member, a closed sectional structure that is tubular in sectional view orthogonal to the vehicle front-rear direction, and
a reinforcement portion including an opposite wall spaced downward from and facing a lower surface of a front portion of the lower member,
the reinforcement portion forms, at least cooperatively with the front portion of the lower member, a lower closed sectional structure that is tubular in sectional view orthogonal to the vehicle front-rear direction, the lower closed sectional structure overlapping the closed sectional structure from below, and
the plurality of support members include a side support member fixed on a portion of the upper member, the portion being located above the lower closed sectional structure.

2. The vehicle front structure according to claim 1, further comprising a pair of front side members extending in the vehicle front-rear direction above the suspension frame and spaced from each other in the vehicle width direction, wherein
coupling portions to a corresponding one of the pair of front side members are provided at a front portion and an intermediate portion of each of the pair of side frames in the vehicle front-rear direction, and an end portion of the frame body in the vehicle width direction, respectively,
an intermediate coupling portion that is the coupling portion provided at the intermediate portion protrudes upward from an upper surface of the intermediate portion, and
a rear portion of the lower closed sectional structure is disposed below the intermediate coupling portion.

3. The vehicle front structure according to claim 1, wherein the side support member is fixed to the upper member and a front portion of the lower member at least at one of a plurality of fixation points to the upper member.

4. The vehicle front structure according to claim 1, wherein
each of the pair of side frames includes a front frame portion extending in the vehicle front-rear direction, a rear frame portion located on a vehicle rear side and a vehicle lower side relative to the front frame portion and extending in the vehicle front-rear direction, and an intermediate frame portion connecting a rear end of the front frame portion and a front end of the rear frame portion,
a rear portion of the lower member is constituted by a rear member extending from a rear end of the lower member to a predetermined position of the intermediate frame portion, and the front portion of the lower member is constituted by a front member extending from a front end of the lower member to a predetermined position of the intermediate frame portion and including a rear end portion joined to the rear member, and
the reinforcement portion is constituted by a member integrated with or separated from the rear member and forms the lower closed sectional structure at least cooperatively with the front member, the lower closed sectional structure overlapping the closed sectional structure from below.
